# EUROPEAN PATENT APPLICATION

(11) **EP 1 071 088 A2**
(43) Date of publication of application: **24.01.2001**
(21) Application number: 00306021.7
(22) Date of filing: 14.07.2000
(51) Int. Cl.: G11B 7/26

(54) **Optical disc and optical disc management system**

(30) Priority: 19.07.1999 JP 20489999; 03.03.2000 JP 2000058624
(71) Applicant: VICTOR COMPANY OF JAPAN, LTD., Yokohama-Shi, Kanagawa-Ken (JP)
(72) Inventor: Nishizawa, Akira, Yokohama-shi, Kanagawa-ken (JP); Oishi, Kenji, Yokohama-shi, Kanagawa-ken (JP)
(74) Representative: Neobard, William John

(57) **Abstract**

An optical disc management system for managing phase change optical discs with disc management data. The disc management data is peculiar to each disc, and is not erased after recorded on each disc. A laser beam is controlled so that optical strength of the laser beam for initialization is larger than optical strength of the laser beam for recording and reproduction according to predetermined initialization requirements, to record disc management data onto each disc in initialization by the laser beam. The management data can be recorded unerasably on the disc as the location and length of an un-initialised area (a) or an excessively initialised area (c), the location and length being peculiar to each disc.

## Description

### BACKGROUND OF THE INVENTION

The present invention relates to optical discs and an optical disc management system for managing data recording to and data reproduction from optical discs using management data peculiar to each optical disc.

A well known optical disc management system manages many optical discs using a management number for each disc.

Other well known management systems manage optical discs storing a lot of software (contents information) to charge for each access to the information. One system correctly identifies the contents information to be charged by linking a management number to the contents information. Another system detects a peculiar management number stored on an optical disc to check whether it is a real one for prevention of faking.

These well known systems require a different management number for each disc, thus causing extra fabrication procedure and high cost to disc manufacturers.

The drawbacks are explained in detail.

One newly introduced high density-type disc is a digital versatile disc (DVD) for which a red laser beam of a wave length about 630 nm is used. A DVD-ROM, as one of this type, is formed with minute information signals (tracks) on a 0. 6 mm-thick disc substrate. This type can be easily duplicated for mass-production.

The Burst Cutting Area (BCA) standards has been established as one of DVD standards for such DVDs.

According to the BCA standards, a high-power laser, such as, a YAG laser, forms a bar code-like pattern on a particular (BCA) area of each DVD after fabricated. The bar code-like pattern is called a BCA code that represents a management number peculiar to each DVD.

In reproduction, a laser beam strikes on the BCA code in the BCA area and is reflected therefrom to detect the management number. The amount of reflected beam or reflectivity varies according to the portions of the BCA code, which is small on the bars while large between the bars.

Disc manufacturers need to buy a BCA printer for forming BCA codes on discs, thus being subjected to causing extra fabrication procedure and high cost.

BCA codes are not suitable to rewritable discs, such as, DVD-Rs, DVD-RWs and DVD-RAMs, because there is a test area for testing whether a laser power for recording and reproduction is sufficient, such as, a Power Calibration Area (PCA) and Recording Management Area (RMA) on a disc surface. This test area is located on a particular portion of a disc surface, where is also suitable for BCA codes. Thus, formation of a BCA code on that portion makes impossible the test. Replacement of the test area to another portion causes extra fabrication procedure.

### SUMMARY OF THE INVENTION

A purpose of the present invention is to provide an optical disc management system that records disc management data on discs without special equipment, such as, a BCA printer, and also optical discs that store disc management data.

The present invention provides an optical disc management system having a controller to control at least a laser beam so that optical strength of the laser beam for initialization is larger than optical strength of the laser beam for recording and reproduction according to predetermined initialization requirements, to record disc management data onto phase change optical discs in initialization by the laser beam, the disc management data being peculiar to each disc, the disc management data once recorded being not erased by another recording and used for managing the optical discs.

Furthermore, the present invention provides an optical disc management system having a detector to radiate a laser beam onto a phase change optical disc after initialization to detect a reflected beam therefrom, the reflected beam varying according to reflectivity on the optical disc, to read disc management data recorded on the change optical disc, used for managing the optical disc, the disc management data being recorded in initialization as a specific pattern of variation in the reflectivity, the disc management data once recorded being not erased by another recording, an amount of variation in optical strength of the reflected beam for reading the disc management data being equal to a value obtained by dividing a specific minimum output by a specific maximum output from the optical disc in reproduction, the value being equal to or smaller than another value obtained by dividing an output from un-initialized area by another output from correctly-initialized area of the optical disc.

Moreover, the present invention provides a phase change optical disc storing disc management data used for managing the optical disc, the disc management data being recorded in initialization by controlling at least a laser beam so that optical strength of the laser beam for initialization is larger than optical strength of the laser beam for recording and reproduction according to predetermined initialization requirements, the disc management data once recorded being not erased by another recording.

### BRIEF DESCRIPTION OF DRAWINGS

FIG. 1 illustrates the first preferred embodiment of an optical disc according to the present invention;
FIG. 2 illustrates the second preferred embodiment of an optical disc according to the present invention;
FIG. 3 illustrates the third preferred embodiment of an optical disc according to the present invention;
FIG. 4 shows an output signal waveform from the optical disc shown in FIG. 1, 2, or 3;
FIG. 5 shows an output signal waveform from the optical disc shown in FIG. 1, 2, or 3;
FIG. 6 shows an output signal waveform from the optical disc shown in FIG. 1, 2, or 3;
FIG. 7 illustrates initialization performed on grooves;
FIG. 8 shows an output signal waveform from an optical disc on which no marks have been recorded;
FIG. 9 shows an output signal waveform from an optical disc on which marks have been recorded;
FIG. 10 shows a block diagram of a comparator according to the present invention; and
FIG. 11 shows a block diagram of an initialization apparatus.

### DETAILED DESCRIPTION OF PREFERRED EMBODIMENTS

The present invention provides an optical disc management system for managing phase change optical discs by using management data.

The system writes the management data on each disc while initializing for protecting the management data from being erased when other data are written after initialization.

More precisely, the management data is written on a data recording area or lead-in area of the disc surface in a direction of the diameter or circumference of the disc.

The management data is written as a specific pattern having predetermined reflectivity. The reflectivity is varying continuously or discontinuously by writing the management data while the disc rotational linear velocity is varying or the disc rotates intermittently.

A laser beam strikes the specific pattern after initialization. The amount of a reflected beam varies according to the reflectivity to detect the pattern for reading the management data.

The present invention is applicable to phase change optical discs, such as, CD-RW, DVD-RAM, DVD-RW, and PD.

The inventors of the present invention have established a method of writing BCA codes on optical discs, each code peculiar to discs one by one.

Disclosed first is a fabrication method for phase change optical discs, such as, CD-RW, DVD-RAM, DVD-RW, and PD.

A thin resist is coated over a glass disc surface. A laser beam from a cutting machine strikes the disc surface to form a spiral groove with a predetermined pitch. The spiral groove is deposited on the disc surface by a development process.

A thin nickel conductive layer is formed on the resist-coated surface. The glass disc is then put into a plating bath for wet nickel plating. The nickel-plated disc is cut into a predetermined size to be a master disc.

A metal mold for molding optical disc is attached to an injection moulding machine, and the master disc is set into the metal mold. A resin, such as, a polycarbonate resin is injected to form disc substrates formed with the spiral groove. Disc substrates usually have a diameter of 120 mm. Thickness is 1. 2 mm for CD-RW, on the other hand, it is 0. 6 mm for DVD-RAM and DVD-RW.

The disc substrates are set in a vacuum chamber for forming a recording layer on each substrate. A zinc sulfide dielectric layer (the first layer), for example, is formed on the substrate. Then, an antimonial or a telluric recording layer (the second layer) is formed on the dielectric layer.

Another zinc sulfide dielectric layer (the third layer) is formed on the recording layer. An aluminous layer, for example, is formed on the dielectric layer, as a metallic reflective layer (the fourth layer).

As disclosed, an optical disc is fabricated as having the dielectric layer, recording layer, dielectric layer and metallic reflective layer, laminated in this order.

Another layer can be formed between the first and second, second and third, or third and fourth layers, to form a five or six-layer disc for offering the recording layer with high sensitivity or durability to rewriting. Moreover, for double recording layer-DVD-RAMs as advanced high density optical discs, the metallic layer (the fourth layer) can be omitted or a semi-conductive layer of silicon carbide, for example, having high thermal conductivity and permiability can be formed as the fourth layer instead of the metallic layer.

After the recording layer is formed, a 5 µm-thick protective layer of a ultraviolet curing resin is applied on the recording layer for single plate-discs, such as, CDs. The resin is hardened by ultraviolet light. A label layer is formed on the protective layer, printed with marking, such as a name of a manufacturer and "CD-RW" that represents contents of the CDs.

For double sided-discs, such as, DVDs, a dummy disc of the diameter and thickness the same as the disc formed with a recording is laminated on the recording layer via a ultraviolet curing resin while the disc is rotating by a spinner (2-P method). The resin is hardened by ultraviolet light. A level layer is formed on the dummy disc.

Moreover, for advanced high density discs, for which a blue laser of a wave length 400 nm is used, and the numerical aperture of an objective lens of an optical head is about 0. 8, the first to fourth layers are formed, in the order that is reverse to that described above, on the disc substrate (1. 2 mm thickness) formed by injection moulding.

In detail, the reflective layer (the fourth layer) is formed on the disc substrate, and then the dielectric layer (the third layer), recording layer (the second layer) and dielectric layer (the first layer) are formed in this order.

A ultraviolet curing resin of about 0. 1 mm thickness is applied on the dielectric layer (the first layer) and hardened by ultraviolet light while the disc is rotating by a spinner. Data will be read from this hardened surface. A label layer is formed on the surface on which no spiral grooves is formed.

The optical discs fabricated as disclosed above are next subjected to initialization.

The recording layer formed on the substrate has been in amorphous phase. A high-power laser beam heats the recording layer to change the layer from the amorphous to crystalline phase (initialization) for high reflectivity. The higher the laser power, the higher the reflectivity of the recording layer. The recording quality of the recording layer thus depends on laser power. This initialization process can be conducted before or after label layer formation.

The initialized discs are now ready for recording. A recording laser beam heats the initialized recording layer to change the recording layer from the crystalline to amorphous phase, to form areas (data called marks) of which reflectivity is lower than that of the other areas (data called spaces) of crystalline phase.

No heating by a laser beam causes no change in crystalline phase, thus reflectivity of the recording layer being the same as when initialized. The recording laser beam rewrites the mark (data) on the recording layer to another mark or a space after the layer has been heated to a temperature for crystallization.

Initialization of recording layers depends on heat of a laser beam and affects recording capability of optical discs.

Recording requirements, such as, laser power and heating time for recording data on phase change optical discs have been stored in memory on a recorder or on each disc itself.

The recording requirements are defined for discs that have already been initialized. In other words, un-initialized discs do not meet the requirements, thus resulting in recording failure.

A laser power for initialization is stronger than that for recording. Therefore, if there is an un-initialized area on disc, the area will keep data of its location and length no matter how many times the disc is rewritten.

Moreover, an excess initialization by laser having power 1. 5 to 2 times stronger than normal one causes insufficient decrease in reflectivity on recording layer, thus resulting in recording failure.

This situation will not be recovered no matter how many times recording is tried.

Therefore, initialization requirements, such as, laser power and heating, are required to be met all over the disc surface for recording.

Laser power requirements for initialization, recording and reproduction is as follows:
excess initialization power > normal initialization power > recording power > reproduction power.

An optical disc management system according to the present invention positively uses the failed situation due to insufficient initialization as described above for management number data recording.

The first preferred embodiment of the optical disc management system records management number data peculiar to each disc as a specific pattern on the basis of variation in reflectivity over the disc surface.

Management number data can be recorded on each disc as the location and length of un-initialized area or excessively initialized area (by laser power 1. 5 to 2 times stronger than normal one), the location and length being peculiar to each disc.

Excessive initialization should not be too much for avoiding groove deformation, which would otherwise occur to further deform tracking guide grooves, thus causing tracking error.

Reflectivity on the un-initialized or excessively initialized area will be lowered compared to correctly initialized areas. This Reflectivity variation over the disc surface exhibits a specific pattern, and which will be detected as disc management number data.

More precisely, disc management number data can be detected as a variation in a push-pull signal for tracking error detection by envelope detection, for example. The signal variation from a disc with management data will be extremely larger or smaller than that from a disc without management data. Management number data can also be detected, when recording, from a tracking signal even on a virgin disc that has never been recorded.

The second preferred embodiment of the optical disc management system initializes a portion of a disc area that has been initialized once to record management data peculiar to each disc as a specific pattern that corresponds to variation in reflectivity over the dis surface. This system uses the fact that the recording requirements for discs changes according to the initialization requirements, that is, laser power.

It is well known that a laser beam spot for initialization is controlled so that it is shaped like a strip in the direction of disc diameter for initializing several tracks at once while a disc is rotating.

The optical disc management system controls a strip-like laser beam spot in such a way that a beam strip edge that has once struck a track for initialization again strikes the track when the disc is rotated for initializing the next track. This achieves twice initialization of the former track. The output of the twice initialized-track will be larger or smaller that that of other tracks that have been initialized only once.

In detail, a laser beam for initialization is controlled so that it vibrates at a specific periodicity in the direction of disc diameter in synchronism with the number of revolutions of a disc or a linear velocity of the disc while initialized. After data is recorded on the disc, it is detected that the data output when reproduced has been modulated according to the laser beam vibration periodicity by amplitude modulation. The amplitude-modulated data output variation can be taken out by envelope detection, as disc management data. The output always exhibits the same variation no matter how many times data is written on the disc, thus can be used as disc management data.

The first and second embodiments of the optical disc management system will be disclosed with reference to the attached drawings.

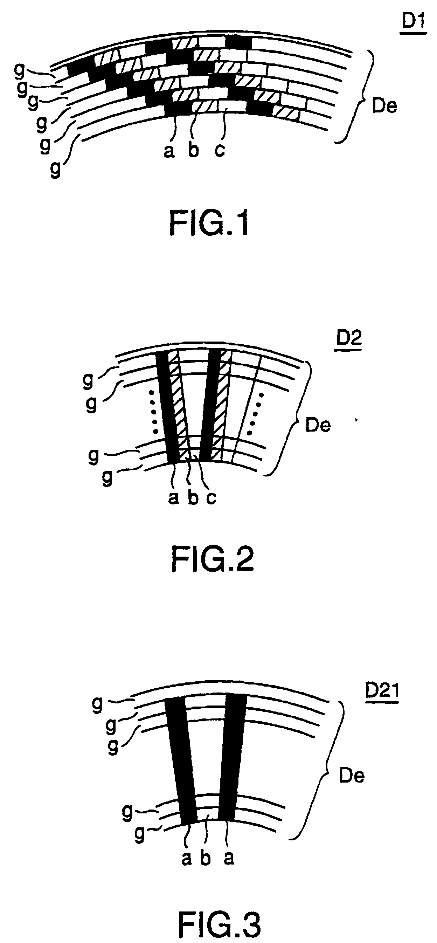

As illustrated in FIG. 1, three areas "a", "b" and "c" having the same length are formed by turns on tracks "g" (a spiral groove) in a data area De of an optical disc D1. The areas "a", "b" and "c" represent un-initialized areas, correctly initialized areas, and excessively initialized areas, respectively.

The three areas are arranged in the direction of disc radius. However, each area type, such as, the areas "a" are not aligned on line in the direction of disc radius because the optical disc D1 is a constant linear velocity (CL)-type.

On the other hand, on a constant angular velocity (CAV)-type optical disc D2 illustrated in FIG. 2, the same area type, such as, the areas "a" are aligned on line in the direction of disc radius. In this case also, the three area types "a", "b" and "c" have the same length.

Illustrated in FIG. 3 is also a CAV-type optical disc D21. However, correctly initialized areas "b" are not formed. The same area types "a" and also "b" are aligned on line in the direction of disc radius.

As is apparent from FIGS. 1 to 3, a feature of the present invention is that the combination of specific patterns, the un-initialized areas "a", the correctly initialized areas "b", and the excessively initialized areas "c" or the combination of patterns, the areas "a" and "c" are formed according to a management number peculiar to each disc.

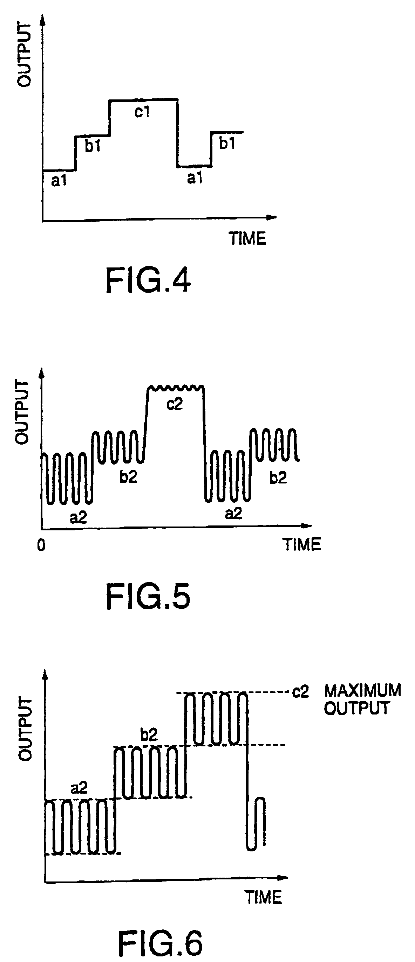

The output signal waveform from the optical disc D1, D2 or D21 generated by a laser beam for recording or reproduction is a stepped-like form, as shown in FIG. 4. Signal portions "a1", "b1" and "c1" represent the output signals from the un-initialized areas "a", the correctly initialized areas "b", and the excessively initialized areas "c", respectively, on each disc.

Shown in FIGS. 5 and 6 are output signals from the optical discs D1, D2 and D21, respectively, which were generated by a laser beam of recording for the first time after initialization.

Signal portions "a2", "b2" and "c2" also represent the output signals from the un-initialized areas "a", the correctly initialized areas "b", and the excessively initialized areas "c", respectively, on each disc.

The third preferred embodiment of the optical disc management system according to the present invention controls a laser beam for initialization so that the laser power varies to record a disc management number peculiar to each disc as a specific pattern that corresponds to reflectivity variation due to variation in initialization over the disc.

The fourth preferred embodiment of the optical disc management system according to the present invention controls the rotation of a disc so that its rotation speed varies or it sometimes stops for an instant during initialization while the laser power for initialization is constant to record a disc management number peculiar to each disc as a specific pattern that corresponds to reflectivity variation due to variation in initialization over the disc.

The initialization requirements for management data recording varies according to a disc rotary speed in the direction of tracks.

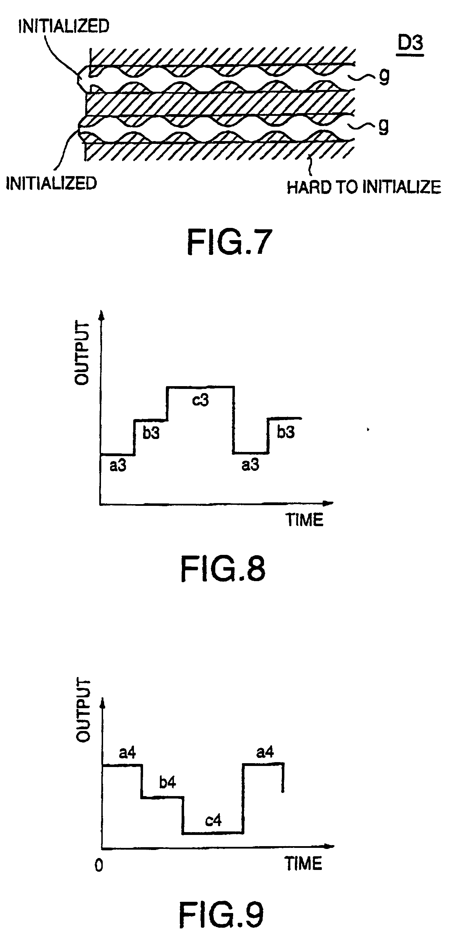

In detail, as illustrated in FIG. 7, initialization is performed on tracks (grooves) "g" in a data area De of an optical disc D3 by periodically and continuously varying the laser power. Oblique line-portions are hard to initialize due to laser movement over disc such that each scanning distance is larger than a laser beam spot.

Data recording to optical discs is classified into two ways.

One is land/groove recording in which data is recorded inside and outside the spiral groove of a disc, such as, DVD-RAM.

The other is groove recording in which data is recorded only inside the spiral groove of a disc, such as, CD-RW and DVD-RW.

The fifth preferred embodiment of the optical disc management system according to the present invention is suitable for the groove recording.

In detail, at least one track (or several tracks) of a spiral groove is not initialized or excessively initialized. Or, one track may be intermittently initialized or further excessively initialized.

Data recording under such initialized condition causes insufficient recording of marks (low reflectivity) in the groove portions that have not been initialized or excessively initialized compared to other groove portions that have been correctly initialized.

Marks are hard to be formed on lands where are outside the groove portions, and hence the reflectivity on the lands have been low or high without changing no matter how many times rewriting is performed.

Reproduced output from tracks having such lands will be different from that from other tracks. In detail, reproduction from un-initialized tracks will generate relatively large output signals that are reversal between the marks and spaces, while from initialized tracks will generate relatively small output signals that are normal on the marks and spaces.

Recording will not form correct marks after excessive initialization, and hence resulting in low output signals when reproduced from un-correct marks. Envelope detection of such low output signals generates outputs that correspond to variation in initialization requirements. If an interval between initialized and un-initialized areas or a period of initialization has been stored, such data can be detected as disc management data from low output signals by envelope detection. In stead of envelope detection, D. C. components of reflected laser beam can be detected as disc management data. Not only the creation of initialized and un-initialized areas but also variation in laser power for initialization on tracks can be used as disc management data.

Vibration of a laser beam over a disc surface (initialization requirements) is preferably 10 KHz or more so as not to affect tracking performance of a recorder for recording data on optical discs. A disc management data-length is preferably 10µm or more in length that is twice or more of the longest length of marks so as not to interfere with correct mark data when reproduced.

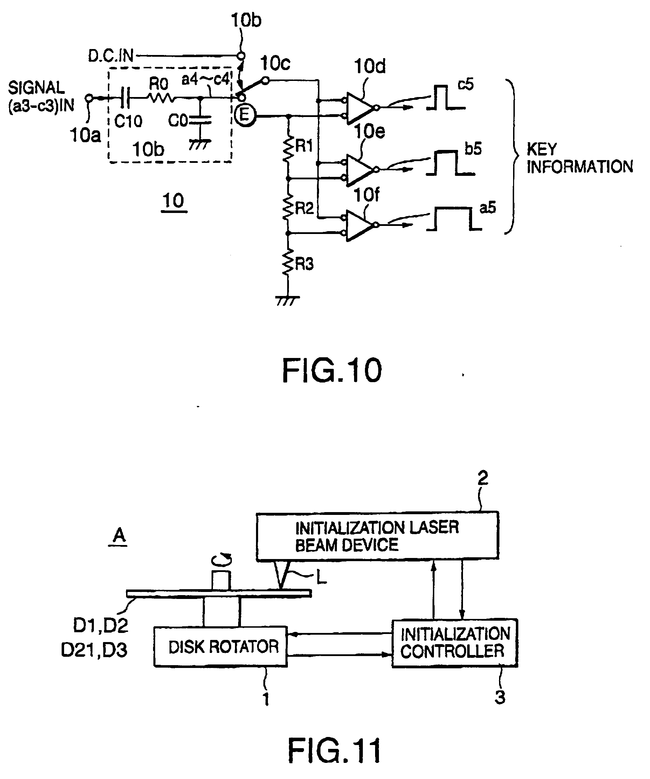

Signals carried by a laser beam reflected from an optical disc and detected by optical heads are supplied to a comparator 10 shown in FIG. 10.

When a detected signal carries no marks (no marks have been recorded in grooves), the detected signal (D. C. signal) is supplied to the comparator 10 via a switch terminal 10b. An output signal from the comparator 10 is shown in FIG. 8.

On the other hand, when a detected signal carries marks (marks have been recorded in grooves), the detected signal (A.C. and D. C. signals) is supplied to the comparator 10 via an input terminal 10a. An output signal from the comparator 10 is shown in FIG. 9.

Envelope-detected output signals at levels a4, b4 and c4 (FIG. 10) can be used as key information for reproducing the optical discs D1, D2 and D21. Optical discs from which such key information is not detected are judged as fake ones under copyright law and prohibited for another recording or reproduction. The present invention thus achieves effective disc management.

More precisely, an output signal from the comparator 10 is a stepped-waveform shown in FIG. 8 for optical discs, as shown in FIGS. 1 to 3, that have been initialized with varying initialization requirements and have not been recorded any data. Waveforms a3, b3 and c3 shown in FIG. 8 represent output signals (indicating reflectivity) from the un-initialized area "a", correctly-initialized area "b" and excessively-initialized area "c" illustrated in FIG. 1 to 3, when no marks have been recorded. The output signals are generated irradiation of a laser beam for recording or reproduction with a normal power.

The other stepped-waveforms a4, b4 and c4 shown in FIG. 9 are the signals obtained by demodulating (envelop detection) the signals a2, b2 and c2 (marks have been recorded) shown is FIG. 6, reproduced after the first data recording by a laser beam for recording with a normal power after initialization.

The comparator 20 shown in FIG. 10 reads key information a5, b5 and c5 by demodulating the signals a2, b2 and c2 shown in FIG. 2.

The signals a2, b2 and c2 indicating reflectivity on the areas "a", "b" and "c" are supplied to an envelope detector 10b via input terminal 10a when marks have been recorded in grooves on disc. The signals a4, b4 and c4 from the detector 10b are supplied to a switch 10c. On the other hand, a D. C. signal is supplied to the switch 10c when no marks have been recorded in grooves on disc. The signal selected by the switch 10c is supplied to comparators 10d, 10e and 10f. The comparator 10d compares the selected signal and a reference voltage E to output the key information c5. The comparators 10e and 10f compare the selected signal and output voltages of resisters R1, R2 and R3 to output the key information b5 and a5, respectively.

As disclosed, disc management data can be stored on optical discs by varying laser power for initialization or locations of laser on disc. The disc management data will not be lost even data is written on disc. Therefore, disc management data can be used as disc management number or key information. Moreover, the disc management data can be stored on disc by a disc initialization device. There is thus no need to buy a new recording device or increase the number of steps of recording, and hence high-quality disc management number can be stored on disc at a low cost.

Optical discs according to the present invention will be disclosed more in detail.

### (First embodiment)

A polycarbonate disc with a spiral groove was prepared. The disc was 0. 6 mm in thickness with 0. 74 µm-track pitch and 30 nm-groove depth.

Vacuum deposition was performed while the disc was rotating in planetary motion at 60 rpm, to form a dielectric layer, a recording layer, another dielectric layer, and a reflective layer in order by sputtering.

More precisely, a vacuum chamber was vacuumed to 6 x 10⁻⁵ Pa. Argon gas was then introduced into the chamber at 1.6 x 10⁻¹ Pa.

Zinc sulfide with 20 mol%-SiO₂ (silicon dioxide) was deposited on the disc substrate by high-frequency magnetron sputtering to form a 71 nm-thick first dielectric layer.

A single target of four elements Sb, Te, Ag and In was sputtered by DC sputtering to form a 20 nm-thick recording layer of Ag₂₁In₆Sb₆₃Te₂₉ (AT%) on the first dielectric layer.

A 17 nm-thick second dielectric layer of the same material as that for the first dielectric layer was formed on the recording layer.

A single target of two elements Al and Ti was sputtered by DC sputtering to form a 150 nm-thick reflective layer of Al_{98.2}Ti_{1.8} (AT%) on the second dielectric layer.

After being taken out from the vacuum chamber, the disc was coated with an acrylic ultraviolet curing resin (XR11 manufactured by Sumitomo Chemical Co., Ltd) by spin coating. The resin was hardened by ultraviolet light to form a 6 µm-thick protective resin layer on the disc for fabricating an optical disc according to the present invention.

Two optical discs fabricated as above were prepared. A slow-acting ultraviolet curing resin was coated on the protective layer of one of the discs by screen-printing and exposed to ultraviolet light for hardening. Two discs were then stuck to each other, pressed and hardened by ultraviolet light to fabricate a double-sided disc.

Initialization was performed to these optical discs by an initialization apparatus shown in FIG. 11.

A disc rotator 1 rotates an optical disc D1, D2, D21 or D3 at a predetermined speed and supplies disc rotation data to an initialization controller 3. An initialization laser beam device 2 emits a laser beams onto the disc and supplies radius data of the disc to the initialization controller 3.

Initialization was performed with a laser beam having a spot (1 µm x 20 µm in tangential and radius direction, respectively, of the disc) of which a beam width in the truck direction was narrower than that in the radius direction, to heat the recording layer at a temperature equal to a crystallization temperature or more.

More in detail, the optical discs D1, D2, D21 or D3 were initialized over the surface from the inner to the outer areas at a speed of 10 µm per rotation at a liner velocity of 2 m/s, with a 120 mw-laser power, which is the most optimal power.

While the discs were initialized, a disc management number was recorded on each disc with an initialization laser beam L that was modulated according to initialization requirements data from the initialization controller 3.

More precisely, the disc management number was recorded on the inner most area (the lead-in area, for example) of the disc while the inner most area had been in the amorphous state without initialization.

The disc management number recording was performed to form crystalline and amorphous-state areas, such as, shown in FIG. 1 while each disc was rotated at the liner velocity 1 m/s by varying the initialization requirements such that a laser beam for initialization was on and off at 10 to 50 KHz (the beam length on the disc 20 µm to 100 µm with an excessive laser power of 160 mw so as not to affect tracking when reproduction.

Recording was then performed to the optical discs D1, D2, D21 and D3 by a disc drive tester DDU 1000 of Pulse Tech Co. that installs a 639 nm-wavelength laser diode and an objective lens of numerical aperture NA = 0. 60, from the disc substrate side to the grooves that project when viewed from the laser beam incident direction. The area of the recording layer where the disc management number was recorded was transformed into crystalline phase exhibited high reflectivity, while the other amorphous-phase area exhibited low reflectivity.

This reflectivity variation resulted in reproduced output variation after initialization and recording as shown below.

### Signal Output after Initialization but before Recording (FIG. 4)

- Un-initialized area (a1): 0. 14 V
- Correctly initialized area (b1): 1. 05 V
- Excessively initialized area (c1): 1. 35 V

The output variation is given by dividing the un-initialized area voltage by the correctly or excessively initialized area voltage (a1/b1 or a1/c1) and is about 0. 10 to 0. 13 V.

### Signal Output after Recording (FIG. 6)

- Un-initialized area (a2): 0. 17 V
- Correctly initialized area (b2): 1. 17 V
- Excessively initialized area (c2): 1. 31 V

The output variation is given by dividing the un-initialized area voltage by the correctly or excessively initialized area voltage (a2/b2 or a2/c2) and is about 0. 13 to 0. 15 V.

Output variation for detecting disc management data is given by dividing the minimum reproduced output by the maximum reproduced output and is preferably equal to or smaller than the value given by dividing the output of un-initialized area by the output of the correctly-initialized area.

### (Second embodiment)

Optical discs D1, D2, D21 and D3 fabricated in the same way for the first embodiment were recorded with disc management number data by striking initialized area with a laser beam of an excessive laser after initialization under the optimal initialization requirements already described.

The disc management number recording was performed to form crystalline and amorphous-state areas, such as, shown in FIG. 1 while each disc was rotated at the liner velocity 1 m/s by varying the initialization requirements such that a laser beam for initialization was on and off at 10 to 50 KHz (the beam length on the disc 20 µm to 100 µm) with an excessive laser power of 160 mw.

The area of the recording layer where the disc management number was recorded was transformed into crystalline phase exhibited high reflectivity, while the other amorphous-phase area exhibited low reflectivity. The disc management number data could be read as the reflectivity variation.

Recording to the optical discs D1, D2, D21 and D3 according to the present invention resulted in insufficient recording to the excessively initialized area, while sufficient recording to the correctly initialized area with reflectivity variation of, particularly, high to the excessively initialized area. The disc management number data could be read according to reproduced signal amplitude variation.

## Claims

1. An optical disc management system comprising a controller to control at least a laser beam so that optical strength of the laser beam for initialization is larger than optical strength of the laser beam for recording and reproduction according to predetermined initialization requirements, to record disc management data onto phase change optical discs in initialization by the laser beam, the disc management data being peculiar to each disc, the disc management data once recorded being not erased by another recording and used for managing the optical discs.

2. The optical disc management system according to claim 1, wherein the controller further controls the laser beam so that the optical strength for initialization is varied according to the initialization requirements, to record the disc management data as a specific pattern of variation in reflectivity in a predetermined direction on each optical disc.

3. The optical disc management system according to claim 1, wherein the controller further controls the laser beam so that the laser beam is intermittently radiated on to the optical discs according to the initialization requirements, to record the disc management data as a specific pattern of variation in reflectivity in a predetermined direction on each optical disc.

4. The optical disc management system according to claim 1, wherein the controller further controls rotation of each optical disc so that disc rotational linear velocity is varied according to the initialization requirements, to record the disc management data as a specific pattern of variation in reflectivity in a predetermined direction on each optical disc.

5. The optical disc management system according to claim 1, wherein the controller further controls rotation of each optical disc so that each disc is intermittently rotated according to the initialization requirements, to record the disc management data as a specific pattern of variation in reflectivity in a predetermined direction on each optical disc.

6. The optical disc management system according to any of claims 1-5 further comprising a detector to radiate a laser beam onto each optical disc after initialization to detect a reflected beam therefrom, the reflected beam varying according to the reflectivity, to read the disc management data peculiar to each disc.

7. An optical disc management system having a detector to radiate a laser beam onto a phase change optical disc after initialization to detect a reflected beam therefrom, the reflected beam varying according to reflectivity on the optical disc, to read disc management data recorded on the change optical disc, used for managing the optical disc, the disc management data being recorded in initialization as a specific pattern of variation in the reflectivity, the disc management data once recorded being not erased by another recording, an amount of variation in optical strength of the reflected beam for reading the disc management data being equal to a value obtained by dividing a specific minimum output by a specific maximum output from the optical disc in reproduction, the value being equal to or smaller than another value obtained by dividing an output from un-initialized area by another output from correctly-initialized area of the optical disc.

8. The phase change optical disc according to claim 7, wherein the disc management data is recorded in a lead-in area of the phase change optical disc.

9. A phase change optical disc storing disc management data used for managing the optical disc, the disc management data being recorded in initialization by controlling at least a laser beam so that optical strength of the laser beam for initialization is larger than optical strength of the laser beam for recording and reproduction according to predetermined initialization requirements, the disc management data once recorded being not erased by another recording.

10. The phase change optical disc according to claim 9, wherein the optical disc is one of a CD-RW, DVD-RAM, DVD-RW.

11. The phase change optical disc according to claim 9, wherein the disc management data is 10 µm or more on a portion of the optical disc, the portion exhibiting a specific reflectivity, in a direction of circumference of the optical disc.

12. The phase change optical disc according to claim 9, wherein the laser beam is further controlled so that the optical strength for initialization is varied according to the initialization requirements, the disc management data being recorded as a specific pattern of variation in reflectivity in a predetermined direction on the optical disc.

13. The phase change optical disc according to claim 9, wherein the laser beam is further controlled so that the laser beam is intermittently radiated on to the optical disc according to the initialization requirements, the disc management data being recorded as a specific pattern of variation in reflectivity in a predetermined direction on the optical disc.

14. The phase change optical disc according to claim 9, wherein rotation of the optical disc is controlled so that disc rotational linear velocity is varied according to the initialization requirements, the disc management data being recorded as a specific pattern of variation in reflectivity in a predetermined direction on the optical disc.

15. The phase change optical disc according to claim 9, wherein rotation of the optical disc is controlled so that the optical disc is intermittently rotated according to the initialization requirements, the disc management data being recorded as a specific pattern of variation in reflectivity in a predetermined direction on the optical disc.

16. The phase change optical disc according to claim 1 or 9, wherein the disc management data is recorded in a lead-in area of the phase change optical disc.
